# FASCICULE DE BREVET EUROPEEN

(11) **EP 1 319 925 B1**
(45) Date de publication et mention de la délivrance du brevet: **31.10.2007**
(21) Numéro de dépôt: 01811219.3
(22) Date de dépôt: 12.12.2001
(51) Int. Cl.: G01B 5/06, G01B 5/00, B23Q 16/00, G01B 5/245

(54) **Appareil de mesure de hauteur**
Höhenmessgerät
Height gauge

(43) Date de publication de la demande: 18.06.2003
(73) Titulaire: TESA SA, 1020 Renens (CH)
(72) Inventeur: Jordil, Pascal, 1612 Ecoteaux (CH); Zanier, Adriano, 1008 Prilly (CH)
(74) Mandataire: P&TS Patents & Technology Surveys SA

(56) Documents cités:
- CH-A- 236 041
- FR-A- 2 201 756
- US-A- 3 753 295
- US-A- 4 667 922
- US-A- 5 373 645

## Description

La présente invention concerne une colonne de mesure de hauteur. La présente invention concerne également la méthode de réglage de la perpendicularité d'une colonne de mesure de hauteur selon l'invention.

Les colonnes de mesure de hauteur sont des machines de mesure permettant la mesure de la hauteur d'un point par rapport à un plan de référence ou le calcul de la distance verticale entre deux points de mesure. La précision généralement attendue de telles machines de mesure est de l'ordre du micron.

Les éléments principaux d'une colonne de mesure de hauteur sont généralement :
un socle ;
un bâti ;
un chariot;
une touche ;
un système de mesure ;
un mécanisme d'entraînement.

Le socle est l'élément par lequel la colonne de mesure de hauteur est en contact avec le sol, généralement une surface plane pouvant servir de référence au référentiel de mesure. Le socle assure également la stabilité de la colonne de mesure de hauteur.

Le bâti est essentiellement perpendiculaire à l'assise du socle et possède généralement sur sa longueur des rails guidant le déplacement du chariot. Il détermine ainsi l'axe de mesure, essentiellement perpendiculaire au plan de l'assise du socle de la colonne de mesure de hauteur.

Le chariot est l'élément mobile de la colonne de mesure de hauteur. Il se déplace sur le bâti le long de l'axe de mesure, généralement sur des rails parfaitement rectilignes guidant son mouvement et assurant sa fixation.

La touche est montée sur le chariot et est destinée à entrer en contact avec la pièce à mesurer. Le point de contact est déterminé soit visuellement, soit automatiquement, par exemple par un mécanisme arrêtant le mouvement du chariot dès qu'une pression dépassant un seuil prédéterminé est exercée sur la touche. La hauteur du point de contact peut ensuite être mesurée.

Le système de mesure comporte des éléments par exemple inductifs, capacitifs ou optoélectroniques intégrés au bâti, permettant de déterminer avec précision la position du chariot le long de l'axe de mesure. Le système de mesure est en général équipé d'un système d'affichage de la mesure et/ou d'un logiciel de traitement des informations.

Le mécanisme d'entraînement contrôle le déplacement du chariot sur le bâti. Il s'agit généralement d'un moteur électrique entraînant une courroie ou un câble attaché au chariot et guidé par une poulie en haut et parfois en bas du bâti. Le mécanisme d'entraînement possède des commandes mécaniques et/ou électroniques permettant un positionnement précis du chariot, et par conséquent de la touche.

Afin de garantir l'exactitude de la mesure de la hauteur, il est important que l'axe de mesure soit perpendiculaire à la surface de référence. Toutefois, les éventuelles erreurs de mesure induites par une légère imprécision de ce paramètre sont faibles, en sorte que cette perpendicularité est rarement idéale dans les colonnes de mesure de hauteur de l'art antérieur. Beaucoup de colonnes disposent en outre d'un circuit électronique de correction, permettant de compenser l'erreur linéaire de mesure sur l'axe vertical causé par une non perpendicularité, le circuit de correction étant étalonné en usine par comparaison avec un étalon. Une correction de la mesure en atelier est toutefois difficile, la plupart des ateliers ne disposant pas des étalons nécessaires.

Cependant, une colonne de mesure de hauteur peut également être utilisée pour des mesures de perpendicularité. La touche peut dans ce cas être remplacée par un comparateur qui est déplacé à fleur le long d'une surface de la pièce à mesurer détectant toute variation de la distance entre la surface à mesurer et l'axe de déplacement du comparateur. Dans une telle application, la perpendicularité entre l'axe de mesure et la surface de référence devient le facteur essentiel de la précision de la mesure. Cette perpendicularité doit par conséquent pouvoir être parfaitement réglée. Un circuit électronique de correction est inutile, puisque l'information fournie par le comparateur est binaire.

Il existe des colonnes de mesure dont la perpendicularité entre le bâti et l'assise du socle est garantie par la précision de fabrication de ces éléments. Les surfaces de contact entre le socle et le bâti sont usinées avec la plus grande précision, garantissant ainsi un assemblage parfait. L'assise du socle doit également être parfaitement plane afin d'imprimer au bâti une position parfaitement perpendiculaire par rapport à la surface de référence. Une variante consiste à utiliser la partie supérieure du socle comme surface de référence et c'est dans ce cas cette dernière qui doit être usinée avec la plus grande précision. Quelle que soit l'option choisie, une telle fabrication est coûteuse et compliquée puisque aussi bien la qualité de l'usinage des pièces que le montage doivent être effectués avec le plus grand soin. Par ailleurs, comme la longueur d'appui de la pièce à mesurer sur le socle ou sur la surface de référence est plus petite que la hauteur de la colonne, toute imprécision d'usinage est encore amplifiée au niveau de la perpendicularité résultante.

D'autres colonnes de mesure possèdent un socle dont l'assise est réglable, permettant ainsi de régler le parallélisme entre le socle et la surface de référence. Ces systèmes sont généralement réalisés à l'aide de pieds ajustables. Ces solutions sont également assez coûteuses car elles impliquent une certaine complexité de l'usinage du socle. De plus, un tel mécanisme n'est pas très stable dans le temps et son réglage doit être contrôlé fréquemment.

Le brevet d'invention décrit une colonne de mesure de hauteur selon la revendication 1 dans laquelle la perpendicularité entre le bâti et le socle peut être réglée.

On comprend aisément que le réglage de la colonne décrite par cette FR2201756 n'est pas facile car les vis de réglage ont en même temps la fonction d'élément de fixation du bâti sur la base.

En outre, le bâti de la colonne décrite par FR2201756 est tenu en position uniquement par friction entre les pointes des vis opposées qui servent à la fois d'élément de fixation et de réglage.

Le brevet US5373645 décrit une colonne de mesure dans laquelle le socle comporte une semelle d'appui, destinée à être posée sur la table de mesure, maintenue par trois dispositifs réglables à l'aide de vis. En ce dispositif, comme dans le précédent, les éléments de support servent aussi d'éléments de liaison et fixation. En outre, la semelle d'appui de US5373645 n'est pas attachée au bâti de la colonne de mesure mais constitue un élément du socle, lequel est à son tour attaché au bâti, en sorte que cette colonne comporte un élément de liaison supplémentaire.

Un des buts de l'invention est de permettre un réglage simple et robuste de la perpendicularité entre l'axe de mesure d'une colonne de hauteur et la surface de travail.

Ce but est atteint selon l'invention grâce à une colonne de mesure possédant les caractéristiques décrites dans la première revendication indépendante. Ce but est en outre atteint grâce à la méthode de réglage indiquée dans la deuxième revendication indépendante.

En particulier, ce but est atteint grâce à une colonne de mesure de hauteur dont la perpendicularité entre le bâti et le socle est réglable, permettant ainsi par extension le réglage de la perpendicularité de l'axe de mesure par rapport à la surface de référence.

Le réglage de la perpendicularité entre le bâti et le socle de la colonne de mesure de hauteur permet de compenser les imprécisions dans le parallélisme ou dans la régularité des surfaces de contact entre les différents éléments de la colonne de mesure de hauteur, en particulier entre le bâti et le socle. Ainsi la fabrication de ces pièces est simplifiée et ses coûts en sont réduits.

La présente invention sera mieux comprise à la lecture de la description donnée à titre d'exemple et illustrée par les figures annexées.

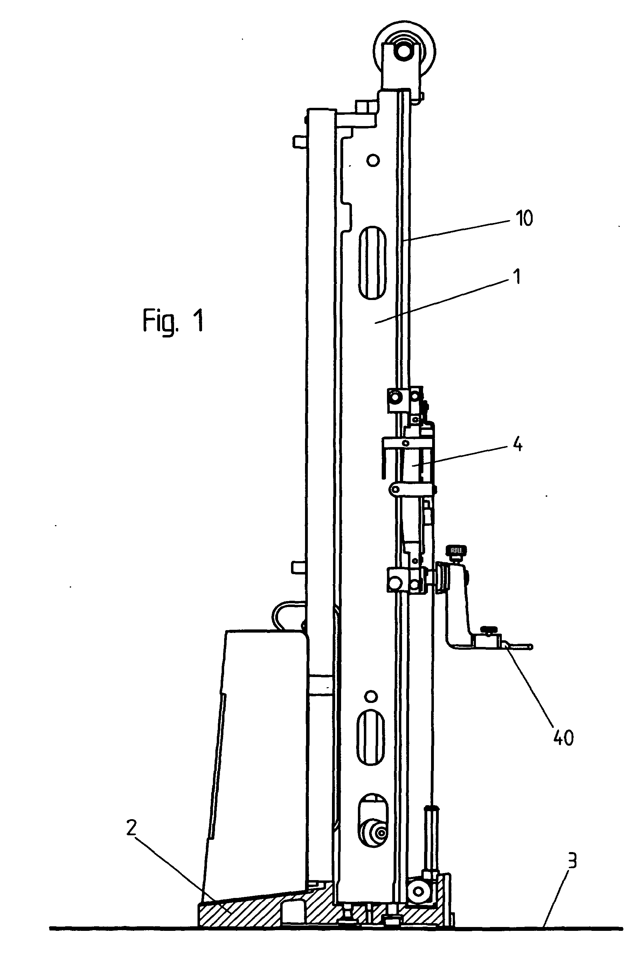

La figure 1 représente une vue simplifiée d'une colonne de mesure de hauteur.

La figure 2 représente une coupe du socle et du bas du bâti d'une colonne de mesure de hauteur selon l'invention.

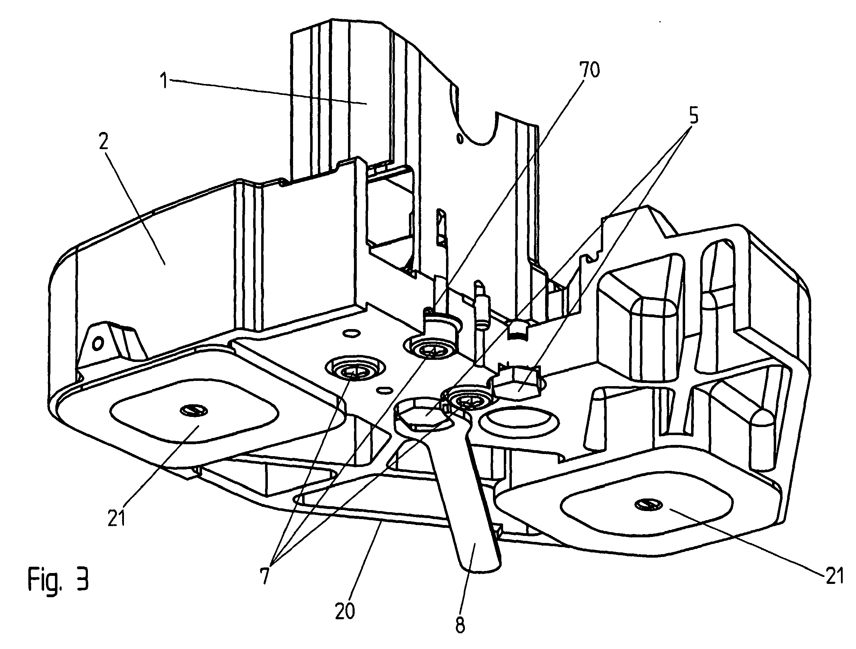

La figure 3 représente une vue en perspective du socle et du bas du bâti d'une colonne de mesure de hauteur selon l'invention.

La version préférentielle de l'invention est une colonne de mesure de hauteur comportant un bâti 1 fixé sur un socle 2 perpendiculairement à l'assise de ce socle 2, un chariot 4 se déplaçant sur des rails 10 le long du bâti 1 définissant ainsi l'axe de mesure. Suivant les applications, par exemple une touche 40 ou un comparateur non représenté sera accroché sur le chariot 4. La colonne de mesure de hauteur selon la version préférentielle de l'invention comporte également un système de mesure afin de déterminer exactement la position du chariot sur le bâti et, par extension, de déterminer les coordonnées sur l'axe de mesure de la position, par exemple de la touche ou du comparateur accroché au chariot. La colonne de mesure de hauteur comporte de plus un mécanisme d'entraînement contrôlant les mouvements du chariot 4 le long du bâti 1.

La colonne de mesure de hauteur selon la version préférentielle de l'invention est destinée à fonctionner sur une surface de référence 3 plane pouvant servir de point zéro de l'axe de mesure, par exemple une table en marbre ou en granit.

Le bâti 1 de la colonne de mesure de hauteur est fixé au socle 2 à l'aide d'éléments de fixation. La fonction des éléments de fixation est d'assurer la tenue du bâti 1 sur le socle 2 et d'éviter tout jeu mécanique entre ces éléments après assemblage. Dans la version préférentielle de la colonne de mesure de hauteur, ces éléments de fixation sont par exemple trois vis de fixation 7. Les vis de fixation 7 sont insérées dans des trous prévus à cet effet sous le socle 2 de la colonne de mesure de hauteur, puis vissées dans des trous filetés à la base du bâti 1 se trouvant en regard des trous du socle 2 lorsque le socle 2 et le bâti 1 sont assemblés. Les vis de fixation 7 sont de préférence des vis à tête cylindrique équipées de rondelles 70 afin de répartir la force exercée autour de la tête sur le socle 2 lors du serrage. Afin d'éviter le desserrage après assemblage des vis de fixation 7, les rondelles 70 seront de préférence de type autobloquant et pourront être assurées par une goutte de colle ou de frein-filet.

Le réglage de la perpendicularité est effectué à l'aide d'éléments de réglage. Ces éléments de réglage sont par exemple deux vis de réglage 5 parallèles aux vis de fixation 7. Les vis de réglage 5 sont vissées dans des trous filetés prévus à cet effet dans le socle 2. Leur extrémité est appuyée contre la surface inférieure du bâti 1, exerçant ainsi sur le bâti une force dans la direction opposée à la direction de la force exercée par les vis de fixation 7. Afin d'assurer un effort homogène des vis de réglage 5 et éviter la déformation de la base du bâti 1 lors du réglage, des pastilles 6 en laiton à faces parallèles sont de préférence intercalées entre les vis de réglage 5 et la base du bâti 1.

Les vis de réglage sont de préférence précontraintes par le serrage des vis de fixation 7. Lors de l'assemblage, les trois vis de fixation 7 sont d'abord serrées à 60-70% de la force de blocage. Les deux vis de réglage sont ensuite vissées jusqu'à exercer une certaine force contre la surface inférieure du bâti 1. Les vis de fixation 7 sont finalement bloquées puis éventuellement encore assurées contre le desserrage, par exemple par ajout d'une goutte de colle ou de frein-filet autour de la tête de la vis.

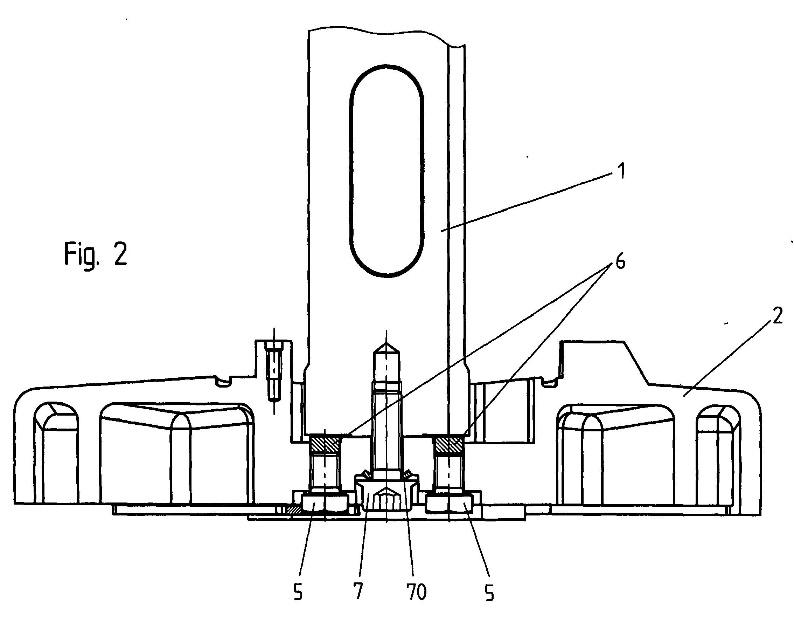

Dans la version préférentielle de l'invention, les trois vis de fixation 7 sont disposées selon un triangle équilatéral dont la base et la hauteur sont sensiblement égales à trois fois le diamètre de la tête desdites vis de fixation 7. Les deux vis de réglage 5 sont avantageusement disposées de part et d'autre de la vis de fixation située au sommet dudit triangle équilatéral, selon un axe parallèle à la base dudit triangle équilatéral, l'écartement entre les vis de réglage 5 étant sensiblement équivalent à l'écartement entre les deux vis de fixation formant la base dudit triangle équilatéral. Le serrage d'une vis de réglage et le desserrage de la vis de réglage opposée permet le réglage de la position du bâti 1 par rapport au socle 2 dans un plan parallèle au plan formé par les deux vis de réglage 5, soit, dans l'exemple illustré, dans un plan parallèle au plan de la coupe de la figure 2. Le serrage ou le desserrage des deux vis de réglage 5 permet le réglage de la position du bâti 1 par rapport au socle 2 dans un plan perpendiculaire au plan formé par les deux vis de réglage 5, soit, dans l'exemple illustré, dans un plan perpendiculaire au plan de la coupe de la figure 2.

Avant la première utilisation de la colonne de mesure de hauteur, la perpendicularité entre l'axe de mesure lié au bâti 1 et la surface de référence 3 doit être réglée. La colonne de mesure de hauteur est posée verticalement 2 sur la surface de référence 3. Le serrage de chaque vis de réglage 5 est ensuite réglé alternativement jusqu'à obtention de la précision recherchée. Les vis de réglage 5 sont de préférence des vis à tête hexagonale pouvant ainsi être réglées à l'aide d'une clé à fourche 8 adaptée glissée sous une fente 20 à la base du socle 2. Une variante consiste à effectuer le réglage de la perpendicularité sur une surface de référence dans laquelle un trou permet l'accès aux vis de réglage depuis dessous. Cette variante est toutefois moins commode pour l'opérateur chargé du réglage de la perpendicularité.

La stabilité temporelle du réglage de la perpendicularité d'une colonne de mesure de hauteur selon l'invention est assurée par le fait que les vis de réglage 5 sont précontraintes. Les vis de réglage 5 étant fortement comprimées, leur matière est constamment à la limite de son élasticité réduisant ainsi l'amplitude d'une possible compression ultérieure. La stabilité temporelle du réglage est également améliorée par la répartition des éléments de fixation et des éléments de réglage sur une superficie carrée dont le côté est sensiblement égal à la longueur d'un élément de fixation encadré de deux éléments de réglage. La limitation de cette surface assure une fermeture très courte de la boucle des forces, limitant ainsi la fatigue de la matière pouvant résulter par exemple de moments de torsion constants trop importants.

Dans la version préférentielle de la colonne de mesure de hauteur telle que décrite plus haut, le bâti est fixé au socle par trois vis de fixation. L'homme du métier comprendra aisément que la fonction des vis de fixation 7 selon l'invention est de fixer les deux éléments ensemble de manière rigide. Il est envisageable de réaliser cette fixation à l'aide d'autres éléments de fixation, tels que par exemple des crochets ou des encoches.

Dans une variante avantageuse de la colonne de mesure de hauteur selon l'invention, la face inférieure du socle 2 contient des cavités 21 dans lesquelles circule un flux d'air comprimé dont la direction est inversible. Lors de réglage de la colonne de mesure de hauteur, l'air est aspiré du sol plaquant ainsi fortement la colonne de mesure sur la surface de référence 3 et lui assurant une bonne stabilité. Cela évite que la colonne ne bouge ou même ne se renverse lors des réglages. Lorsque la colonne de mesure de hauteur doit être déplacée, le flux d'air est inversé soulevant légèrement la colonne de mesure de hauteur et facilitant son déplacement.

## Revendications

1. Colonne de mesure de hauteur comprenant un bâti (1) attaché à un socle (2) à l'aide d'au moins un élément de fixation (7), **caractérisée en ce que** la perpendicularité entre ledit socle (2) et ledit bâti (1) est réglable à l'aide d'au moins un élément de réglage (5) séparé dudit au moins un élément de fixation.

2. Colonne de mesure de hauteur selon la revendication 1, ledit bâti (1) étant fixé audit socle (2) à l'aide de trois éléments de fixations, lesdits trois éléments de fixation(7) étant constitués de trois vis de fixation.

3. Colonne de mesure de hauteur selon la revendication 2, lesdites vis de fixation (7) se situant sous ledit socle (2).

4. Colonne de mesure de hauteur selon une des revendications 2 ou 3, lesdites trois vis de fixation (7) étant disposées selon un triangle équilatéral dont la base et la hauteur sont sensiblement égales à trois fois le diamètre de la tête desdites vis de fixation (7).

5. Colonne de mesure de hauteur selon une des revendications 1 à 4, le blocage dudit au moins un élément de fixation étant assuré par ajout de colle ou de frein-filet.

6. Colonne de mesure de hauteur selon la revendication 1, ledit élément de réglage exerçant entre le bâti (1) et le socle (2) une force dans la direction opposée à la direction de la force exercée par ledit au moins un élément de fixation (7).

7. Colonne de mesure de hauteur selon une des revendications 1 ou 6, le réglage de la perpendicularité entre ledit bâti (1) et ledit socle (2) étant effectué à l'aide de deux éléments de réglage, lesdits deux éléments de réglage étant constitués de deux vis de réglage (5).

8. Colonne de mesure de hauteur selon la revendication 7, lesdites vis de réglage se situant sous ledit socle.

9. Colonne de mesure de hauteur selon une des revendications 7 ou 8, lesdits éléments de fixation (7) consistant en trois vis de fixation disposées selon un triangle équilatéral, lesdites deux vis de réglage (5) étant disposées de part et d'autre de la vis de fixation située au sommet dudit triangle équilatéral, selon un axe parallèle à la base dudit triangle équilatéral, l'écartement entre les vis de réglage (5) étant sensiblement équivalent à l'écartement entre les deux vis de fixation formant la base dudit triangle équilatéral.

10. Colonne de mesure de hauteur selon une des revendications de 7 à 9, lesdites vis de réglage (5) étant précontraintes lors de l'assemblage de ladite colonne de mesure de hauteur par le blocage desdits éléments de fixation (7).

11. Colonne de mesure de hauteur selon une des revendications 7 à 10, lesdites vis de réglage étant des vis à tête hexagonale.

12. Colonne de mesure de hauteur selon une des revendications précédentes, ledit socle (2) comprenant une fente (20) permettant le réglage des éléments de réglage lorsque ladite colonne de mesure de hauteur est posée verticalement sur ledit socle (2).

13. Colonne de mesure de hauteur selon une des revendications précédentes, ledit socle comprenant des cavités (21) dans lesquelles peut circuler un flux d'air comprimé inversible.

14. Méthode de réglage de la perpendicularité d'une colonne de mesure de hauteur selon l'une des revendications précédentes par rapport à une surface de référence (3) comprenant l'étape suivante : réglage de la perpendicularité entre le bâti (1) et le socle (2) de la colonne de mesure de hauteur à l'aide dudit au moins un élément de réglage (5).

15. Méthode de réglage selon la revendication 14, ledit réglage étant effectué par serrage/desserrage d'au moins une vis de réglage (5).

16. Méthode de réglage selon la revendication 15, ledit réglage étant effectué à l'aide d'une clé à fourche au travers d'une fente (20) dans la base dudit socle (2).

17. Méthode de réglage selon une des revendications 14 à 16, ledit socle (2) étant plaqué sur ladite surface de référence par l'action d'un flux d'air circulant dans des cavités (21) dudit socle (2).

18. Méthode de réglage selon une des revendications 14 à 17 comprenant les étapes suivantes :
serrage d'éléments de fixation dudit bâti (1) sur ledit socle (2) jusqu'à une force représentant 60 à 70% de la force de blocage ;
serrage d'éléments de réglage de la perpendicularité dudit bâti (1) par rapport audit socle (2) jusqu'à une force prédéterminée ;
serrage desdits éléments de fixation jusqu'à 100% de la force de blocage.

19. Méthode de réglage selon la revendication 18, comprenant l'étape supplémentaire d'assurer le blocage desdits éléments de fixation par ajout de colle ou de frein-filet.

## Claims

1. Height-measuring column comprising a supporting frame (1) fastened to a base (2) by means of at least one fastening element (7), **characterized in that** the perpendicularity between said base (2) and said supporting frame (1) can be regulated by means of at least one regulating element (5) separated from said at least one fastening element.

2. Height-measuring column according to claim 1, said supporting frame (1) being fastened to said base (2) by means of three fastening elements, said three fastening elements (7) being constituted by three fastening screws.

3. Height-measuring column according to claim 2, said fastening screws (7) being located under said base (2).

4. Height-measuring column according to one of the claims 2 or 3, said three fastening screws (7) being placed along an equilateral triangle whose base and height are more or less equal to three times the diameter of the head of said fastening screws (7).

5. Height-measuring column according to one of the claims 1 to 4, the blocking of said at least one fastening element being secured by the adjunction of glue or of a screw locking product.

6. Height-measuring column according to claim 1, said regulating element exerting between the supporting frame (1) and the base (2) a force in the direction opposite to the direction of the force exerted by said at least one fastening element (7).

7. Height-measuring column according to one of the claims 1 or 6, the perpendicularity between said supporting frame (1) and said base (2) being regulated by means of two regulating elements, said two regulating elements being constituted of two regulating screws (5).

8. Height-measuring column according to claim 7, said regulating screws being located under said base.

9. Height-measuring column according to one of the claims 7 or 8, said fastening elements (7) consisting of three fastening screws arranged along an equilateral triangle, said two regulating screws (5) being placed on each side of the fastening screw situated at the top of said equilateral triangle, along an axis parallel to the base of said equilateral triangle, the spacing between the regulating screws (5) being more or less equivalent to the spacing between the two fastening screws forming the base of said equilateral triangle.

10. Height-measuring column according to one of the claims 7 to 9, said regulating screws (5) being prestressed during assembly of said height-measuring column through the blocking of said fastening elements (7).

11. Height-measuring column according to one of the claims 7 to 10, said regulating screws being hexagon head screws.

12. Height-measuring column according to one of the preceding claims, said base (2) comprising an aperture (20) allowing the regulating elements to be adjusted when said height-measuring column is placed vertically on said base (2).

13. Height-measuring column according to one of the preceding claims, said base comprising cavities (21) in which a stream of compressed air with a non-singular direction can circulate.

14. Method for regulating the perpendicularity of a height-measuring column according to one of the preceding claims relative to a reference surface (3) comprising the following step: regulating the perpendicularity between the supporting frame (1) and the base (2) of the height-measuring column by means of said at least one regulating element (5).

15. Regulating method according to claim 14, said regulating being performed by screwing/unscrewing at least one regulating screw (5).

16. Regulating method according to claim 15, said regulating being performed by means of a wrench through an aperture (20) in the seat of said base (2).

17. Regulating method according to one of the claims 14 to 16, said base (2) being pinned onto said reference surface by the action of an air stream circulating in the cavities (21) of said base (2).

18. Regulating method according to one of the claims 14 to 17, comprising the following steps:
screwing fastening elements of said supporting frame (1) onto said base (2) with a force corresponding to 60-70% of the locking force;
screwing the elements for regulating the perpendicularity of said supporting frame (1) relative to said base (2) until a predetermined force;
screwing said fastening elements until 100% of the locking force.

19. Assembly method according to claim 18, comprising the additional step of securing the locking of said fastening elements by the adjunction of glue or of a screw locking product.

## Patentansprüche

1. Höhenmesssäule mit einem Gestell (1), das an einer Grundplatte (2) mit Hilfe mindestens eines Befestigungselements (7) befestigt ist, **dadurch gekennzeichnet, dass** die Rechtwinklichkeit zwischen der besagten Grundplatte (2) und dem besagten Rahmen (1) mit Hilfe mindestens eines Regulierungselements (5), das vom mindestens einem Befestigungselement getrennt ist, einstellbar ist.

2. Höhenmesssäule gemäss Anspruch 1, wobei das besagte Gestell (1) an der besagten Grundplatte (2) mit Hilfe von drei Befestigungselementen befestigt ist, wobei die besagten drei Befestigungselemente (7) aus drei Befestigungsschrauben bestehen.

3. Höhenmesssäule gemäss Anspruch 2, wobei die besagten Befestigungsschrauben (7) sich unter der besagten Grundplatte (2) befinden.

4. Höhenmesssäule gemäss einem der Ansprüche 2 oder 3, wobei die besagten drei Befestigungsschrauben (7) gemäss einem gleichseitigen Dreieck angeordnet sind, dessen Basis und Höhe mehr oder weniger drei Mal dem Durchmesser der Köpfe der besagten Befestigungsschrauben (7) entsprechen.

5. Höhenmesssäule gemäss einem der Ansprüche 1 bis 4, wobei die Verriegelung des mindestens einen Befestigungselements durch Zusatz von Leim oder Schraubensicherung gewährleistet ist.

6. Höhenmesssäule gemäss Anspruch 1, wobei das besagte Regulierungselement zwischen dem Gestell (1) und der Grundplatte (2) eine Kraft in eine Richtung ausübt, die zur Richtung der vom besagten mindestens einem Befestigungselement (7) ausgeübten Kraft entgegen gesetzt ist.

7. Höhenmesssäule gemäss einem der Ansprüche 1 oder 6, wobei die Rechtwinklichkeit zwischen dem besagten Gestell (1) und der besagten Grundplatte (2) mit Hilfe von zwei Regulierungselementen eingestellt wird, wobei die besagten zwei Regulierungselemente aus zwei Regulierungsschrauben (5) bestehen.

8. Höhenmesssäule gemäss Anspruch 7, wobei die besagten Regulierungsschrauben sich unter der besagten Grundplatte befinden.

9. Höhenmesssäule gemäss einem der Ansprüche 7 oder 8, wobei die besagten Befestigungselemente (7) aus drei Befestigungsschrauben bestehen, die gemäss einem gleichseitigen Dreieck angeordnet sind, wobei die besagten zwei Regulierungsschrauben (5) auf je einer Seite der an der Spitze des besagten gleichseitigen Dreiecks gelegenen Befestigungsschraube angeordnet sind, entlang einer zur Basis des besagten gleichseitigen Dreiecks parallelen Achse, wobei der Abstand zwischen den Regulierungsschrauben (5) mehr oder weniger gleich dem Abstand zwischen den beiden Befestigungsschrauben ist, welche die Basis des besagten gleichseitigen Dreiecks bilden.

10. Höhenmesssäule gemäss einem der Ansprüche 7 bis 9, wobei die besagten Regulierungsschrauben (5) während des Zusammenbaus der besagten Höhenmesssäule durch Verriegelung der besagten Befestigungselemente (7) vorgespannt sind.

11. Höhenmesssäule gemäss einem der Ansprüche 7 bis 10, wobei die besagten Regulierungsschrauben Sechskantschrauben sind.

12. Höhenmesssäule gemäss einem der vorhergehenden Ansprüche, wobei die besagte Grundplatte (2) einen Schlitz (20) umfasst, der das Einstellen der Regulierungselemente erlaubt, wenn die besagte Höhenmesssäule senkrecht auf die besagte Grundplatte (2) gestellt wird.

13. Höhenmesssäule gemäss einem der vorhergehenden Ansprüche, wobei die besagte Grundplatte Aushöhlungen (21) aufweist, in welchen ein umkehrbarer Strom komprimierter Luft zirkulieren kann.

14. Verfahren zur Einstellung der Rechtwinklichkeit einer Höhenmesssäule gemäss einem der vorhergehenden Ansprüche in Bezug auf einer Referenzfläche (3) mit dem folgenden Schritt: Einstellung der Rechtwinklichkeit zwischen dem Gestell (1) und der Grundplatte (2) der Höhenmesssäule mit Hilfe des mindestens einen Regulierungselements (5).

15. Einstellungsverfahren gemäss Anspruch 14, wobei die besagte Einstellung durch Anziehen/Lösen mindestens einer Regulierungsschraube (5) geschieht.

16. Einstellungsverfahren gemäss Anspruch 15, wobei das besagte Einstellen mit Hilfe eines Gabelschlüssels durch einen Schlitz (20) am Unterteil der besagten Grundplatte (2) durchgeführt wird.

17. Einstellungsverfahren gemäss einem der Ansprüche 14 bis 16, wobei die besagte Grundplatte (2) auf die besagte Referenzfläche durch Einwirkung eines in den Aushöhlungen (21) der besagten Grundplatte (2) zirkulierenden Luftstromes gedrückt wird.

18. Einstellungsverfahren gemäss einem der Ansprüche 14 bis 17, mit den folgenden Schritten:
Anziehen von Befestigungselementen des besagten Gestells (1) auf der besagten Grundplatte (2) bis zu einer Kraft, die 60 bis 70% der Verriegelungskraft entspricht;
Anziehen von Regulierungselementen der Rechtwinklichkeit des besagten Gestells (1) in Bezug auf die besagte Grundplatte (2) bis zu einer vorbestimmten Kraft;
Anziehen der besagten Befestigungselemente bis 100% der Verriegelungskraft.

19. Einstellungsverfahren gemäss Anspruch 18, mit dem zusätzlichen Schritt, dass die Verriegelung der besagten Befestigungselemente durch Zusatz von Leim oder Schraubensicherung gewährleistet wird.
